(19) Europäisches Patentamt

European Patent Office

Office européen des brevets

(11) **EP 1 004 426 A1**

(12) **EUROPEAN PATENT APPLICATION**
published in accordance with Art. 158(3) EPC

(43) Date of publication:
**31.05.2000 Bulletin 2000/22**

(51) Int. Cl.[7]: **B29C 65/02**, B29C 65/78,
B29C 53/36, B29C 51/12

(21) Application number: **98907263.2**

(22) Date of filing: **17.03.1998**

(86) International application number:
**PCT/JP98/01117**

(87) International publication number:
**WO 98/41383 (24.09.1998 Gazette 1998/38)**

(84) Designated Contracting States:
**DE FR GB IT**

(30) Priority: **17.03.1997 JP 9762997**

(71) Applicant:
**Daikin Industries, Limited
Osaka-shi, Osaka 530-0015 (JP)**

(72) Inventors:
• **SHIRASAKI, Osamu,
Yodogawa Works, Daikin Ind. Ltd
Settsu-shi, Osaka 566-0044 (JP)**

• **KAWACHI, Shoji,
Yodogawa Works, Daikin Ind. Ltd
Settsu-shi, Osaka 566-0044 (JP)**
• **TANIGAWA, Shingo,
Yodogawa Works, Daikin Ind. Ltd
Settsu-shi, Osaka 566-0044 (JP)**

(74) Representative: **HOFFMANN - EITLE
Patent- und Rechtsanwälte
Arabellastrasse 4
81925 München (DE)**

(54) **METHOD OF BONDING AND MOLDING MODIFIED POLYTETRAFLUOROETHYLENE MOLDINGS**

(57) A method for producing a molded article of modified polytetrafluoroethylene by joining by providing at least one molding part of modified polytetrafluoroethylene on or near an inner wall of a mold, heating said at least one molding part to a temperature equal to or higher than the melting point of modified polytetrafluoroethylene while rotating the mold carrying said at least one molding part around at least one rotation axis of the mold, and joining the abutted faces of said at least one molding part and finishing the outer surface of the molding part in a contour following the inner wall surface of the mold. This method can produce the molded article of modified PTFE which has a smooth inner surface having neither steps nor unevenness.

Fig. 2

Printed by Xerox (UK) Business Services
2.16.7 (HRS)/3.6

**Description**

FIELD OF THE INVENTION

The present invention relates to a method for producing the molded article of a modified polytetrafluoroethylene (hereinafter referred to as "modified PTFE") by joining. In particular, the present invention relates to a method for producing the molded article of a modified PTFE by joining the abutting faces of at least one molding part of a modified PTFE while heating it in a rotating mold.

PRIOR ART

A method is known to produce the molded article of a modified PTFE, which comprises heating and press-bonding two or more molding parts of a modified PTFE (see Hostaflon Information 21 (August, 1983) published by Hoechst AG). However, in this method, faces to be press-bonded should be smoothened, but it is difficult to smooth the faces by cutting. In addition, molding parts should be set horizontally in the course of pressing, but it is difficult to control pressure during press-bonding. In either case, defective products tend to be produced due to the fluctuation of bond strength.

JP-B-63-67808 discloses the bonded product of the molded articles of a modified PTFE. However, the articles are bonded by heating and press-bonding. That is, the articles are bonded by heating while applying external pressure. This method may be suitable for bonding thin articles such as sheets or films, but tends to produce defective products because of the fluctuation of bond strength when thick articles are bonded by this method, like in the case of the above method described in the brochure of Hoechst AG.

JP-A-55-57429 discloses a method which uses a special mold comprising a tubular mold and a center mold inserted in the tubular mold, and comprises setting a PTFE sheet rolled in a tubular form with abutting its ends in a space between the molds, heating it to the melting point of PTFE or higher, and fusion bonding the abutted ends of the sheet by an expansion pressure.

To produce a thick wall container comprising a bottom and a sidewall, a method is known, which comprises filling a modified PTFE powder in a mold and pressing it while heating at a temperature higher or lower than the melting point of modified PTFE. However, the compression distance is short at the bottom, while it is long at the sidewall. Thus, cracks may be formed at parts near the interface between the bottom and the sidewall, so that good molded articles are difficult to produce.

Molded articles produced by any one of the above-described methods have steps or unevenness on the outer and inner surfaces at the bonded areas, and dusts accumulate in particular at the steps or uneven parts on the inner surface. Thus, the molded articles have problems when they are used as containers for high purity liquids.

To produce the container of PTFE or modified PTFE, a method is known, which comprises welding molding parts constituting the container such as two or more sheets with meltable fluororesins. However, the welded parts have unevenness, since the meltable fluororesins are used as welding rods. Thus, the produced products are not suitable as containers for high purity liquids.

To produce containers for high purity liquids, a roto-molding of meltable fluororesins is known. However, the inner surfaces of the containers have appreciable unevenness, since the accumulated powder of the meltable resins grow upwardly to form a layer. Thus, the containers produced by this method are undesirable as containers for high purity liquids.

JP-A-4-357015 discloses a method comprising placing at least one piece of a thermoplastic resin sheet along the inner wall surface of a mold, and heating the sheet to the melting point of the resin or higher while rotating the mold to fusion bond the ends of the sheet. However, this patent application relates to the integration of a thermoplastic resin sheet, which is not a modified PTFE sheet, by fusion bonding.

SUMMARY OF THE INVENTION

One object of the present invention is to provide a method for producing the molded article of a modified PTFE by joining, which article consists of molding parts which are uniformly and strongly integrated at abutted faces, and has no steps or unevenness on the inner and outer surfaces of the article, in particular, on the inner surface.

Accordingly, the present invention provides a method for producing the molded article of modified PTFE by joining comprising the steps of:

providing at least one molding part of modified PTFE on or near the inner wall of a mold,
heating said at least one molding part to a temperature equal to or higher than the melting point of modified PTFE while rotating the mold carrying said at least one molding part around at least one rotation axis of the mold, and

joining the abutted faces of said at least one molding part and finishing the outer surface of the molding part in a contour following the inner wall surface of the mold.

In particular, if articles to be molded by joining were made of modified PTFE which is not thermoplastic, there would have been no motivation to produce the articles of modified PTFE by joining sheet or other molding parts of modified PTFE by simply rotating a mold like in the above prior art method. When the present inventors tried such a molding method of modified PTFE, it was found that, surprisingly, the abutted faces of molding parts were uniformly and strongly bonded, and characteristically, the obtained molded articles of modified PTFE had smooth inner surfaces having no steps or unevenness at or near the bonded faces.

When a reinforcing material and a meltable fluororesin are used and laminated on the molded article of modified PTFE simultaneously with the joint molding, the reinforcing material and the mass of the meltable fluororesin are both inserted between the inner surface of a mold and at least a part of the molding parts of modified PTFE, and then they are molded by joining by the same method as described above.

BRIEF DESCRIPTION OF THE DRAWINGS

Fig. 1 shows molding parts used in Example 1.
Fig. 2 is a cross sectional view of a mold used in Example 1.
Fig. 3 is a cross sectional view of a mold used in Example 2.
Fig. 4 is a cross sectional view of a mold used in Example 3.

DETAILED DESCRIPTION OF THE INVENTION

The shapes of molding parts maybe sheets, tubes, cylinders, blocks, rods, and any other shapes. Sheets having a thickness of 1 to 5 mm are preferable.

Molds are preferably those used in roto-molding such as cylindrical molds, bottle-shaped molds, etc., although any molds used to mold fluororesins may be used. It is preferable for molds to have at least one small hole with a diameter of 0.1 mm or larger, for venting.

The method of the present invention is particularly useful for the production of hollow molded articles such as containers to store and/or transport liquids.

Modified PTFE is a polymer obtained by polymerizing tetrafluoroethylene in the presence of one or more modifier monomers.

Examples of the modifier monomers for PTFE include fluorine-containing unsaturated monomers other than TFE, such as a fluoroalkyl vinyl ether of the formula:

$$X(CF_2)_nOCF=CF_2$$

wherein X is a hydrogen atom, a fluorine atom or a chlorine atom, and n is an integer of 1 to 6, or the formula:

$$C_3F_7(OCF_2CF_2CF_2)_m[OCF(CF_3)CF_2]_kOCF=CF_2$$

wherein m and k are each an integer of 0 to 4, provided that they are not 0 (zero) at the same time; $CF_3\text{-}CF=CF_2$, $CF_2=CFH$, $CF_2=CFCl$, $CF_2=CH_2$; a vinyl compound of the formula:

$$RfCY=CH_2$$

wherein Rf is a linear or branched polyfluoroalkyl group having 3 to 21 carbon atoms, and Y is a hydrogen atom or a fluorine atom; and the like.

Such a modifier monomer is usually used in an amount of 0.01 to 1.0 wt. % of the weight of TFE depending on the kind of the modifier monomer.

The specific melt viscosity of modified PTFE used in the present invention is usually from $1 \times 10^7$ to $1 \times 10^{11}$ poises, preferably from $1 \times 10^8$ to $1 \times 10^{10}$ poises.

Examples of meltable fluororesins include tetrafluoroethylene/hexafluoropropylene copolymers, tetrafluoroethylene/perfluoro (alkyl vinyl ether) copolymers, polyvinylidene fluoride, ethylene/tetrafluoroethylene copolymers, vinylidene fluoride/tetrafluoroethylene copolymers, polychlorotrifluoroethylene, etc. Among them, tetralfuoroethylene/hexafluoropropylene copolymers and tetralfuoroethylene/perfluoro (alkyl vinyl ether) copolymers (hereinafter referred to as "PFA") are preferred.

Examples of reinforcing materials include glass cloth, glass knit, carbon cloth, carbon knit, etc.

The molding parts of modified PTFE may be produced by compression molding the molding powder of modified PTFE by conventional processes under conventional conditions, and optionally sintering the premolded articles.

Sintered articles are usually used as molding parts, although premolded or unsintered articles may be used.

The molding parts of modified PTFE used in the present invention may contain various fillers such as the fiber or powder of glass, carbon, bronze, etc. in suitable amounts.

One or more molding parts are placed in a mold having an inner wall surface which corresponds to the contour of a final molded article, and heated to a temperature equal to or higher than the melting point of modified PTFE while rotating the mold. A mold is rotated around at least one rotation axis of the mold, preferably two rotation axes.

A peripheral speed is at least 0.5 m/min. around one specific rotation axis. The upper limit of a peripheral speed is physically determined. When a peripheral speed is too high, the resin is clustered at the corners of the mold so that the thickness of the wall of a produced article fluctuates from part to part. Thus, the preferred range of a peripheral speed is naturally set. Such a range is suitably selected depending on various factors such as the sizes and shapes of molded articles, the presence and amounts of fillers, the sizes and forms of abutted faces, etc. In general, a peripheral speed is from 2 to 7 m/min. around one specific rotation axis.

In any case, a heating-rotating time is not limited and is determined so that the part is sufficiently heated, and uniformly and strongly bonded at its abutted faces. Effects of the Invention

According to the method of the present invention, it is possible to produce the molded article of modified PTFE the abutted faces of which are uniformly and strongly bonded together, and which has a smooth inner surface having neither steps nor unevenness.

EXAMPLES

The present invention will be illustrated by the following examples.

Example 1

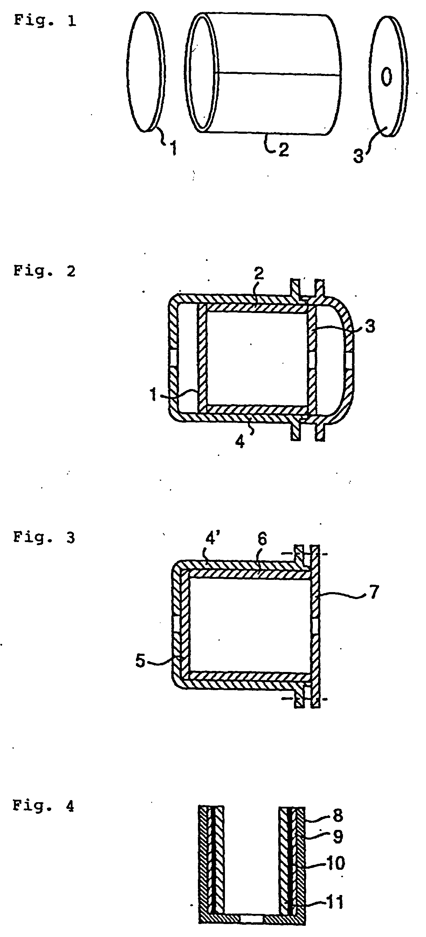

A sheet having a thickness of 3 mm was skived from the sintered molded block of modified PTFE (POLYFLON® M-111), and two discs 1, 3 each having the sane diameter as the inner diameter of a mold were cut out from the sheet (Fig. 1). The disc 3 was holed to form an opening of a finished container.

The same sheet was cut out to form a sheet 2 having the same length as the internal circumference of the mold 4, and a width corresponding to the height of a container (Fig. 1).

As shown in Fig. 2, the sheet 2 was rolled and placed in the mold so that it was in contact with the whole inner surface of the mold, and the discs 1, 3 were provided at the respective sides of the rolled sheet.

The mold had an inner diameter of about 161 mm and a height of about 213 mm.

Then, the mold was placed in a heating furnace and heated at a temperature of 380 to 385°C for about 2 hours, while biaxially rotating the mold at a rotation speed of 20 rpm (about 3.2 m/min.) on the internal circumference side of the mold and at a revolution speed of 9.5 rpm (about 2 m/min.) on the height side of the mold. Thereafter, the mold was moved to the room temperature atmosphere of 25°C while biaxially rotating it, and cooled at room temperature for about 1 hour. Then, the molded article was recovered from the mold. Thus, a bottle having a contour following the inner surface of the mold, no seams and a uniform thickness was obtained.

The change of the outer diameter was about 8 %, while the change of the height was about 8 %. These size changes are calculated according to the following equations:

Change of outer diameter (%):

-[Inner diameter of mold(mm) - Outer diameter of molded article after cooling (mm)] x100/[Inner diameter of mold (mm)]

Change of height (%):

-[Height of mold (mm) - Height of molded article after cooling (mm)]x100/[Height of mold (mm)]

Example 2

A sheet having a thickness of 1 mm and a sheet having a thickness of 3 mm were skived from the molded block of modified PTFE (POLYFLON**®** M-111).

A disc 5 having the same diameter as the inner diameter of a mold was cut out from the sheet having a thickness of 3 mm, and set on the bottom of the mold (inner diameter: about 161 mm).

Then, the sheet having a thickness of 1 mm was rolled in three turns along the inner wall surface of the mold, and fixed with the lid 7.

The mold was heated in a furnace maintained at a temperature of 380 to 385°C for about 2 hours while biaxially rotating the mold at a rotation speed of 20 rpm and at a revolution speed of 9.5 rpm. Thereafter, the mold was moved to the room temperature atmosphere of 25°C while biaxially rotating it, and cooled at room temperature for about 1 hour. Then, the molded article was recovered from the mold. Thus, a container having an opening on the top was obtained.

Example 3

The glass cloth 9 was placed ong the inner wall surface of the mold 8 shown in Fig. 4, and then the PFA film (thickness: 100 μm) was placed on the inner surface of the glass cloth 9. Finally, a cut sheet of modified PTFE (thickness: 3 mm) was placed inside the PFA sheet with mating the upper edge of the modified PTFE sheet with that of the PFA sheet.

The mold 8 was heated in a furnace maintained at 380°C for one hour while rotating the mold around one rotation axis, and then cooled at a room temperature of 25°C for 30 minutes. Then, the molded laminate pipe was recovered from the mold.

The molded products of Examples 1 and 2 both had the smooth surfaces on the inner sides of the bonded parts. When a JIS No. 3 dumbbell-shaped sample, which was cut out from each article with including the bonded part, was subjected to a tensile test using a tensile tester, TENSILON (manufactured by Shimadzu Corporation), the strength of the bonded part was at least one-half of that of the base material.

**Claims**

**1.** A method for producing a molded article of modified polytetrafluoroethylene by joining comprising the steps of:

provisioning at least one molding part of modified polytetrafluoroethylene on or near an inner wall of a mold,
heating said at least one molding part to a temperature equal to or higher than the melting point of modified polytetrafluoroethylene while rotating the mold carrying said at least one molding part around at least one rotation axis of the mold, and
joining the abutted faces of said at least one molding part and finishing the outer surface of the molding part in a contour following the inner wall surface of the mold.

**2.** A method according to claim 1, wherein said molded article is a hollow article.

**3.** A method according to claim 1 or 2, wherein said at least one molding part is produced by compression premolding a molding powder of modified polytetrafluoroethylene.

**4.** A method according to claim 1 or 2, wherein said at least one molding part is produced by compression premolding a molding powder of modified polytetrafluoroethylene and then sintering the premolded part.

**5.** A method according to any one of claims 1 to 4, wherein said mold is rotated at a peripheral speed of at least 0.5 m/min. around one rotation axis.

**6.** A method according to any one of claims 1 to 4, wherein said mold is rotated around two rotation axes.

**7.** A method according to any one of claims 1 to 6, wherein said mold has at least one hole.

**8.** A method according to any one of claims 1 to 7, wherein said modified polytetrafluoroethylene has a specific melt viscosity of from $1 \times 10^7$ to $1 \times 10^{11}$ poises.

**9.** A method according to claim 8, wherein said modified polytetrafluoroethylene has a specific melt viscosity of from

**EP 1 004 426 A1**

$1 \times 10^8$ to $1 \times 10^{10}$ poises.

10. A method according to any one of claims 1 to 9, wherein a reinforcing material and a meltable fluororesin are inserted between the inner surface of said mold and at least a part of said at least one molding part, and then they are laminated at the same time as the joining of said at least one molding part.

**6**

Fig. 1

1    2    3

Fig. 2

2

3

1

4

Fig. 3

4'    6

5    7

Fig. 4

8
9
10
11

# INTERNATIONAL SEARCH REPORT

International application No.

PCT/JP98/01117

**A. CLASSIFICATION OF SUBJECT MATTER**
Int.Cl⁶ B29C65/02, 65/78, 53/36, 51/12

According to International Patent Classification (IPC) or to both national classification and IPC

**B. FIELDS SEARCHED**

Minimum documentation searched (classification system followed by classification symbols)
Int.Cl⁶ B29C65/02-65/42, 65/78, 53/36-53/78, 51/00-51/46

Documentation searched other than minimum documentation to the extent that such documents are included in the fields searched

| | | | |
|---|---|---|---|
| Jitsuyo Shinan Toroku Koho | 1996-1998 | Kokai Jitsuyo Shinan Koho | 1971-1998 |
| Jitsuyo Shinan Koho | 1926-1996 | Toroku Jitsuyo Shinan Koho | 1994-1998 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP, 4-357015, A (Daikin Industries, Ltd.), December 10, 1992 (10. 12. 92), | 1, 2, 5-10 |
| Y | Claims ; page 2, right column, lines 33 to 37, page 2, right column line 43 to page 3, left column, line 8, page 3, left column, lines 15 to 28, lines 37 to 39 (Family: none) | 3, 4 |
| A | JP, 63-274529, A (Fujitsu Ltd.), November 11, 1988 (11. 11. 88), Claims (Family: none) | 1-10 |
| A | JP, 5-091835, U (Nippon Pillar Packing Co., Ltd.), December 14, 1993 (14. 12. 93), Claims & EP, 500178, A1 & AU, 9211005, A & CA, 2061308, A & ZA, 9201281, A & AU, 645392, B | 1-10 |
| Y | JP, 5-500780, A (Mather Seal Co.), February 18, 1993 (18. 02. 93), | 3, 4 |
| A | Claims & WO, 9100887, A & US, 5032335, A & EP, 482082, B1 & DE, 69014887, E | 1, 2, 5-10 |

☐ Further documents are listed in the continuation of Box C.  ☐ See patent family annex.

| | |
|---|---|
| *     Special categories of cited documents:<br>"A"  document defining the general state of the art which is not considered to be of particular relevance<br>"E"  earlier document but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| | |
|---|---|
| Date of the actual completion of the international search<br>May 29, 1998 (29. 05. 98) | Date of mailing of the international search report<br>June 16, 1998 (16. 06. 98) |
| Name and mailing address of the ISA/<br>Japanese Patent Office | Authorized officer |
| Facsimile No. | Telephone No. |

Form PCT/ISA/210 (second sheet) (July 1992)